# EUROPÄISCHE PATENTSCHRIFT

(11) **EP 2 876 778 B1**
(45) Veröffentlichungstag und Bekanntmachung des Hinweises auf die Patenterteilung: **02.08.2017**
(21) Anmeldenummer: 13194042.1
(22) Anmeldetag: 22.11.2013
(51) Int. Cl.: G06F 1/30, G06F 11/20, H02J 9/06, H02J 13/00

(54) **Elektrische Anlage mit einer unterbrechungsfreien Stromversorgungseinheit**
Electrical system with an uninterruptible power supply unit
Installation électrique dotée d'une unité d'alimentation électrique sans coupure

(43) Veröffentlichungstag der Anmeldung: 27.05.2015
(73) Patentinhaber: Siemens Aktiengesellschaft, 80333 München (DE)
(72) Erfinder: Allahut, Gerd, 91171 Greding (DE); Schmidt, Hans-Klaus, 90579 Langenzenn (DE)

(56) Entgegenhaltungen:
- US-A- 5 734 230
- US-A1- 2009 251 002
- US-A1- 2013 124 000
- US-A1- 2013 169 046

## Beschreibung

Die Erfindung betrifft ein Verfahren zum Betrieb einer elektrischen Anlage mit einer Mehrzahl an elektrischen Verbrauchern, welche an eine Grundversorgungsspannung angeschlossen sind und bei Ausfall der Grundversorgungsspannung an eine Pufferspannung angeschlossen werden, um die Versorgung der elektrischen Verbraucher für eine Zeitdauer einer Pufferphase sicherzustellen, wobei die Pufferspannung mittels einer unterbrechungsfreien Stromversorgungseinheit bereitgestellt wird.

Des Weiteren betrifft die Erfindung eine elektrisch betriebene Anlage zur Durchführung des Verfahrens.

Bei derartigen Anlagen mit einer unterbrechungsfreien Stromversorgungseinheit ist es bisher üblich, dass nach einer fest konfigurierten Zeit die unterbrechungsfreie Stromversorgungseinheit ihren Leistungsausgang abschaltet.

Dabei ergeben sich allerdings folgende Probleme:
Die Anlage, der Anlagenteil bzw. der Teilnehmer kann sich nicht auf die Abschaltung vorbereiten. Zudem werden wichtige Abhängigkeiten der Teilnehmer untereinander nicht berücksichtigt.

Selbst eine unterbrechungsfreie Stromversorgungseinheit, die über spezielle Funktionsbausteine ein besonderes Abschaltmanagement realisiert, kann komplizierte Abhängigkeiten unter den Teilnehmern nicht vollständig auflösen. Es kommt bei der Vorbereitung auf die bevorstehende Abschaltung zu Inkonsistenzen und Datenverlusten. Des Weiteren kann auch bei Spannungswiederkehr im Pufferbetrieb die Anlage nicht einwandfrei weiterbetrieben werden. Es kommt zu Ausfallzeiten.

Aus der EP 1 223 656 A1 ist eine unterbrechungsfreie Stromversorgung für eine Rotationsdruckmaschine bekannt, bei welcher bei einer Störung in der Versorgungsspannung eine Steuerfolge auslösbar ist, gemäß der die Rotationsdruckmaschine in einen standardmäßig definierten Produktionshalt fahrbar ist. Bei der elektrischen Anlage nach EP 1 223 656 A1 gibt es nur einen elektrischen Verbraucher, nämlich die Rotationsdruckmaschine, welcher in direkter Verbindung mit der unterbrechungsfreien Stromversorgung steht.

Bei einer elektrischen Anlage mit einer Mehrzahl von elektrischen Verbrauchern, welche durchaus dezentral in einem industriellen Prozess angeordnet sein können, ist es von Nachteil, dass der einzelne elektrische Verbraucher bei einem Fehlen der Grundversorgungsspannung sich nicht auf die bevorstehende Abschaltung vorbereiten kann. Es drohen dadurch Datenverluste, undefinierte Anlagenzustände sowie Schäden an Werkstücken und der Anlage, da durch eine unkoordinierte Abschaltung ein im Lauf befindlicher Prozess/Teilprozess abrupt unterbrochen wird. Die US 2013/0124000 A1 offenbart ein Verfahren zum zentral gesteuerten Herunterfahren von Geräten in einem Verbund von Geräten im Falle eines Stromausfalls. Daher liegt der Erfindung die Aufgabe zugrunde, den Abregelvorgang für eine Mehrzahl von universellen elektrischen Verbrauchern zuverlässiger zu realisieren. Die Aufgabe wird für das eingangs genannte Verfahren dadurch gelöst, dass
- die unterbrechungsfreie Stromversorgungseinheit zum Austausch von Daten über einen Feldbus an die Mehrzahl der elektrischen Verbraucher angeschlossen wird,
- die Mehrzahl der elektrischen Verbraucher jeweils mit einem Softwarebaustein versehen werden, welcher in die Kommunikation über den Feldbus eingebunden wird,
- der Softwarebaustein zumindest eines Verbrauchers als ein Master und die Softwarebausteine der anderen Verbraucher als Slaves im Sinne einer Master-Slave-Kommunikation ausgeführt werden,
- der Master in der Stromversorgungseinheit als ein Kommunikationspartner für eine Durchführung eines geregelten Abschaltvorganges der elektrischen Verbraucher eingetragen wird,
- die Stromversorgungseinheit im Falle eines Fehlens der Grundversorgungsspannung dieses Fehlen über den Feldbus dem Master mitteilt und dadurch der geregelte Abschaltvorgang gestartet wird,
- der Abschaltvorgang in konfigurierbaren Synchronisationsstufen erfolgt,
- zu jeder Synchronisationsstufe für jeden Verbraucher in seinem jeweiligen Softwarebaustein hinterlegt wird, ob der Verbraucher seinen energetischen Zustand beibehalten oder wechseln soll und, falls mehrere energetische Zustandswechsel möglich und vorgesehen sind, in welchen energetischen Zustand gewechselt werden soll,
- der Master nacheinander den Verbrauchern jede Synchronisationsstufe signalisiert,
- die in den Softwarebausteinen hinterlegten energetischen Zustandswechsel der Verbraucher für die jeweilige Synchronisationsstufe erledigt werden und
- nach Erledigung der entsprechende Softwarebaustein dies dem Master meldet.

Mit einer über einen Feldbus kommunikationsfähigen, unterbrechungsfreien Stromversorgungseinheit für eine elektrische Anlage kann ein geregelter Abschaltvorgang mittels lokal in den elektrischen Verbrauchern installierten Softwarebausteinen realisiert werden. Über diese Softwarebausteine, welche in die Kommunikation über den Feldbus eingebunden sind, kann die unterbrechungsfreie Stromversorgungseinheit in einer elektrischen Anlage derart datentechnisch eingebunden werden, dass die elektrischen Verbraucher, beispielsweise Steuerungskomponenten, speicherprogrammierbare Steuerungen oder Leitsysteme, ein Auftreten des Fehlens der Grundversorgungsspannung rechtzeitig berücksichtigen können. Wechselt die unterbrechungsfreie Stromversorgungseinheit von einem Normalbetrieb in einen Betrieb, bei welchem eine Pufferspannung bereitgestellt wird, so kann die unterbrechungsfreie Stromversorgungseinheit diese Pufferspannung nur für eine gewisse Zeitdauer einer Pufferphase bereitstellen. Mit den in den elektrischen Verbrauchern installierten Softwarebausteinen und der Signalisierung des Fehlens der Grundversorgungsspannung durch die unterbrechungsfreie Stromversorgungseinheit können sich die elektrischen Verbraucher aufgrund des Wechsels der unterbrechungsfreien Stromversorgung von dem Normalbetrieb in den Pufferbetrieb frühzeitig auf eine bevorstehende Abschaltung vorbereiten.

Durch die Anwendung des Abschaltmanagements mit Synchronisationsstufen können Abhängigkeiten in einer komplexen Anlage/Anlagenteilen sowie komplexe Abhängigkeiten zwischen den einzelnen Teilnehmern bzw. Verbrauchern und deren internen Prozessen aufgelöst/abgebildet werden und bei der Vorbereitung auf eine bevorstehende Abschaltung berücksichtigt werden. Inkonsistenzen und Datenverluste werden ausgeschlossen.

In einer vorteilhaften Ausgestaltung wird das Verfahren dadurch verbessert, dass der Master eine Teilnehmerliste zur Verfügung stellt und die Verbraucher mittels ihrer als Slave eingestellten Softwarebausteine in die Teilnehmerliste eingetragen werden.

Vorteilhafterweise stellt der Master eine leere Teilnehmerliste zur Verfügung, alle Softwarebausteine, welche als Slave parametriert sind, melden sich bei dem Master mit ihren relevanten Informationen an, dabei wird die Teilnehmerliste mit Informationen über Adressen, Gerätetypen, Energieverbrauch, Zeitdauern usw., gefüllt.

Insbesondere für den Betrieb einer elektrischen Anlage im Zusammenhang mit einer industriell automatisierten elektrischen Anlage werden als elektrische Verbraucher Geräte aus den Gruppen: Speicherprogrammierbare Steuerungen, Bedien- und Beobachtungssysteme, Industrie- oder Personal-Computer verwendet.

Die eingangs genannte Aufgabe wird ebenso durch eine elektrisch betriebene Anlage zur Durchführung des Verfahrens mit einer Mehrzahl an elektrischen Verbrauchern, welche an eine Grundversorgungsspannung angeschlossen sind, gelöst. Dabei ist eine unterbrechungsfreie Stromversorgungseinheit vorhanden, welche ausgestaltet ist, bei Ausfall der Grundversorgungsspannung eine Pufferspannung an die elektrischen Verbraucher anzuschalten, um die Versorgung der elektrischen Verbraucher für eine Zeitdauer einer Pufferphase sicherzustellen, wobei die Stromversorgungseinheit ausgestaltet ist, Daten über einen Feldbus mit der Mehrzahl der elektrischen Verbraucher auszutauschen, wobei die Mehrzahl der elektrischen Verbraucher jeweils einen Softwarebaustein aufweisen, welcher ausgestaltet ist, über den Feldbus zu kommunizieren, wobei der Softwarebaustein zumindest eines Verbrauchers als ein Master und die Softwarebausteine der anderen Verbraucher als ein Slave im Sinne einer Master-Slave-Kommunikation ausgestaltet sind. Die Stromversorgungseinheit ist dabei als ein Kommunikationspartner des Masters für eine Durchführung eines geregelten Abschaltvorganges der elektrischen Verbraucher ausgestaltet. Weiterhin ist die Stromversorgungseinheit ausgestaltet im Falle eines Fehlens der Grundversorgungsspannung dieses Fehlen über den Feldbus dem Master mitzuteilen.

Der Master und die Softwarebausteine der Verbraucher sind derart ausgestaltet, den Abschaltvorgang in konfigurierbaren Synchronisationsstufen durchzuführen. Zu jeder Synchronisationsstufe ist für jeden Verbraucher in seinem jeweiligen Softwarebaustein hinterlegt, ob der Verbraucher seinen energetischen Zustand beibehalten oder wechseln soll und, falls mehrere energetische Zustandswechsel möglich und vorgesehen sind, in welchen energetischen Zustand gewechselt werden soll. Außerdem ist der Master ausgestaltet, nacheinander den Verbrauchern jede Synchronisationsstufe zu signalisieren.

Die Verbraucher sind ausgestaltet, die in den Softwarebausteinen hinterlegten energetischen Zustandswechsel für die jeweilige Synchronisationsstufe zu erledigen und die Softwarebausteine sind ausgestaltet, nach Erledigung der energetischen Zustandswechsel für die jeweilige Synchronisationsstufe dies dem Master zu melden.

Um die individuellen Bedürfnisse eines jeden elektrischen Verbrauchers zu berücksichtigen, weist der Master eine Teilnehmerliste auf und die Verbraucher sind ausgestaltet, mittels ihrer als Slave eingestellten Softwarebausteine sich in die Teilnehmerliste einzutragen. Vorzugsweise werden in die Teilnehmerliste Informationen über Adressen, Gerätetypen, Energieverbrauch, Zeitdauern über ein Herunterfahren usw. eingetragen.

Um einen Inbetriebsetzer die Arbeit und die Konfiguration an der elektrischen Anlage zu erleichtern, sind die Stromversorgungseinheit, die elektrischen Verbraucher und die Softwarebausteine derart ausgestaltet, dass sie über ein Softwarewerkzeug parametrierbar sind.

Die Zeichnung zeigt ein Ausführungsbeispiel, dabei zeigt die
- FIG 1: eine elektrische Anlage mit elektrischen Verbrauchern und einer unterbrechungsfreien Stromversorgungseinheit, wobei die elektrischen Verbraucher mit einem Softwarebaustein versehen sind,
- FIG 2: die elektrische Anlage aus FIG 1, wobei ein elektrischer Verbraucher zusätzlich einen als Master ausgestalteten Softwarebaustein aufweist und
- FIG 3: beipielhaft den Ablauf eines Abschaltvorgangs mehrerer Verbraucher in Synchronisationsstufen.

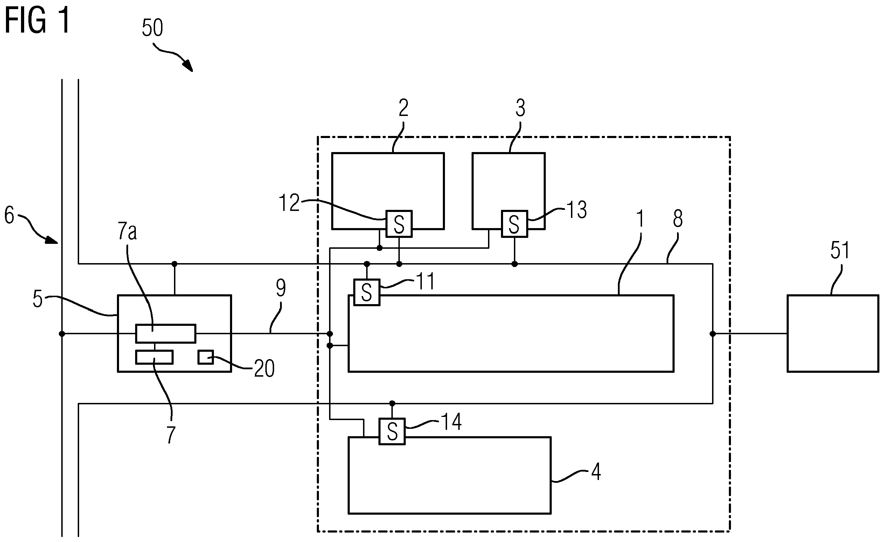

Gemäß FIG 1 ist eine elektrisch betriebene Anlage 50 mit einer Mehrzahl an elektrischen Verbrauchern 1 bis 4 dargestellt. Ein erster Verbraucher 1 ist als ein Industrie-PC mit einer Prozesssteuerungssoftware, einem Archiv, einem Lizenzbaustein und einem Wordprogramm ausgestaltet, ein zweiter Verbraucher 2 ist als ein Industrie-HMI-Panel zum Bedienen und Beobachten eines Prozesses ausgestaltet, ein dritter Verbraucher 3 ist als eine speicherprogrammierbare Steuerung zum Steuern eines Teilprozesses ausgestaltet und ein vierter Verbraucher 4 ist als ein Leitsystem Industrie-PC mit einem Bedien- und Beobachtungsprogramm und einer softwaregestützten speicherprogrammierbaren Steuerung ausgestaltet.

Die Verbraucher 1 bis 4 sind über eine Spannungsversorgungsleitung 9 an eine unterbrechungsfreie Stromversorgungseinheit 5 angeschlossen. Die unterbrechungsfreie Stromversorgungseinheit 5 erhält über eine 24 V-Zuleitung eine Grundversorgungsspannung 6. Diese Grundversorgungsspannung 6 schaltet sich im Normalbetrieb über eine Umschaltvorrichtung 7a an die elektrischen Verbraucher 1 bis 4. Für den Fall eines Ausfalles der Grundversorgungsspannung 6 ist die unterbrechungsfreie Stromversorgungseinheit 5 dazu ausgestaltet, mittels der Umschaltvorrichtung 7a auf ein Batteriemodul mit einer Pufferspannung 7 umzuschalten und die elektrischen Verbraucher 1 bis 4 über die Spannungsversorgungsleitung 9 mit der Pufferspannung 7 zu versorgen.

Demnach wird bei Ausfall der Grundversorgungsspannung 6 die Pufferspannung 7 an die elektrischen Verbraucher 1 bis 4 angeschaltet, um die Versorgung der elektrischen Verbraucher für eine Zeitdauer einer Pufferphase sicherzustellen.

Abhängig von der Kapazität des Batteriemoduls der unterbrechungsfreien Stromversorgungseinheit 5 und den Verbrauchswerten der elektrischen Verbraucher kann eine Überbrückungszeitdauer 20 im Bereich von 20 Sekunden bis einigen Minuten dauern. D.h., während der Überbrückungszeitdauer 20 können die elektrischen Verbraucher regulär weiterarbeiten, obwohl Pufferbetrieb herrscht. Sollte innerhalb der Überbrückungszeitdauer 20 die Grundversorgungsspannung 6 nicht wiederkehren, so wird mittels in den elektrischen Verbrauchern 1 bis 4 installierten Softwarebausteinen 11 bis 14 ein kontrollierter Abschaltvorgang der einzelnen elektrischen Verbraucher 1 bis 4 gestartet. Dazu weist der erste Verbraucher 1 einen ersten Softwarebaustein 11, der zweite Verbraucher 2 einen zweiten Softwarebaustein 12, der dritte Verbraucher 3 einen dritten Softwarebaustein 13 und der vierte Verbraucher 4 einen vierten Softwarebaustein 14 auf.

Die Softwarebausteine 11 bis 14 sind bezüglich ihrer Verbraucher 1 bis 4 mit einer individuellen Abschaltsequenz parametriert. Diese Parametrierung kann durch ein Softwarewerkzeug 51 erfolgen, das ebenso wie die Softwarebausteine 11,12,13,14 an einen Feldbus 8 angeschlossen ist.

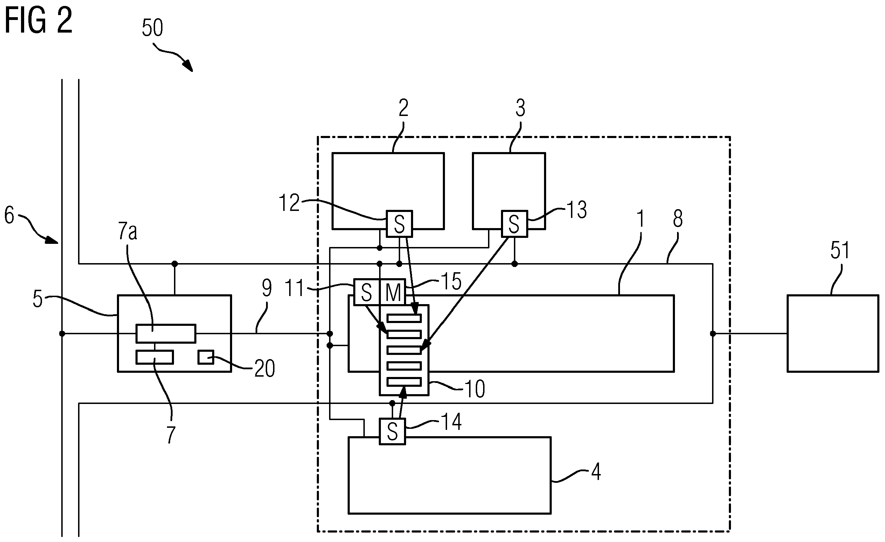

Gemäß der FIG 2 erhält ein spezieller elektrischer Verbraucher, nämlich der erste Verbraucher 1, zusätzlich oder in Kombination einen besonderen Softwarebaustein, nämlich einen fünften Softwarebaustein 15, welcher als ein Master M im Sinne einer Master-Slave-Kommunikation ausgestaltet ist, dabei sind die Softwarebausteine 11 bis 14 als ein Slave S zu dem Master M ausgestaltet.

Der Master M weist eine Teilnehmerliste 10 auf, wobei die Verbraucher 1 bis 4 mittels ihrer als Slave S eingestellten Softwarebausteine 11 bis 14 ausgestaltet sind, sich in die Teilnehmerliste 10 einzutragen. Der Master M ist ausgestaltet, einen Datenverkehr zwischen der unterbrechungsfreien Stromversorgungseinheit 5 und eben sich selber durchzuführen. Demnach ist der Master M in der Lage, Daten der unterbrechungsfreien Stromversorgungseinheit 5 anzufragen bzw. entgegenzunehmen und diese zu verarbeiten. In der Master-Slave-Kommunikationskonfiguration der elektrischen Anlage 50 steuert der Master M die Softwarebausteine 11 bis 14 in den Verbrauchern 1 bis 4.

In der unterbrechungsfreien Stromversorgungseinheit 5 ist die Überbrückungszeitdauer 20 hinterlegt, dabei ist der Master M ausgestaltet, die Überbrückungszeitdauer 20 abzufragen und zusätzlich ausgestaltet, mit Beginn des Fehlens der Grundversorgungsspannung 6, welches er durch ein Signal der unterbrechungsfreien Stromversorgungseinheit 5 mitgeteilt bekommt, zu messen, wie lange das Fehlen bereits andauert und für den Fall, dass das Fehlen länger als die Überbrückungszeitdauer andauert, ist der Master ausgestaltet, an die Slaves S einen Befehl zum Start ihrer jeweiligen individuellen Abschaltsequenz zu senden.

Um den Abschaltvorgang koordiniert im Sinne eines Abschaltmanagements durchzuführen, ist der Master ausgestaltet, die individuellen Abschaltsequenzen mittels der Teilnehmerliste 10 zu überwachen und nach einem erfolgreichen Durchführen der individuellen Abschaltsequenzen seine eigene Abschaltsequenz zu starten, diese ist wiederum in dem ersten Softwarebaustein 11 zusätzlich zu dem Master M implementiert, wobei der Master den Start seiner eigenen Abschaltsequenz wiederum der unterbrechungsfreien Stromversorgungseinheit 5 mitteilt, welche dann nach Beendigung der Abschaltsequenz des ersten Softwarebausteins 11 die Pufferspannung abschaltet. Nach diesem koordinierten Herunterfahren aller elektrischer Verbraucher 1 bis 4 befindet sich die elektrische Anlage 50 in einem definierten, sicheren Zustand.

Das Verfahren bzw. die Softwarebausteine 11 bis 14 sind dahingehend ausgelegt bzw. parametrierbar, dass für den Abschaltvorgang ein zeitgesteuertes Abschalten, ein energiegesteuertes Abschalten oder ein Abschalten nach Synchronisationsstufen gewählt werden kann.

Die Softwarebausteine in Form eines Masters M können vorteilhafterweise in zwei Varianten vorliegen, nämlich für beispielsweise einen Microsoft-Windows-PC als eine Software-Applikation oder für beispielsweise eine speicherprogrammierbare Steuerung als ein Funktionsbaustein.

Die Softwarebausteine in ihrer Funktion als Slaves können ebenfalls als eine Microsoft-Windows-PC-Software-Applikation, als ein Funktionsbaustein für speicherprogrammierbare Steuerungen oder als eine Microsoft-Windows-CE-Software-Applikation, beispielsweise für HMI-Panels vorliegen.

Die Softwarebausteine sollen im Folgenden als Agenten bezeichnet werden und weisen vorteilhafterweise ein über das Softwarewerkzeug 51 bedienbares User-Interface auf.

Agenten, die auf einem PC-System oder auf einem HMI-Panel installiert sind, melden sich demnach einem Betreiber der elektrischen Anlage 50 als ein selbsterklärendes User-Interface an. Dabei wird zwischen einem User-Interface des Master-Agenten und einem User-Interface eines Slave-Agenten unterschieden.

Das User-Interface des Master-Agenten bietet eine Auswahlmöglichkeit zwischen dem zeit- und energiegesteuertem Abschalten an. Bei Auswahl der zeitgesteuerten Abschaltung bietet das User-Interface weitere Einstellmöglichkeiten, wie z.B. Zeitspanne bis zum Start der Abschaltphase, an. Bei Auswahl der energiegesteuerten Abschaltung bietet das User-Interface Eingabemöglichkeiten der Energiemenge an, die in der Abschaltphase vom Anlagenteil bzw. elektrischen Verbraucher verbraucht wird. Auch besteht die Auswahlmöglichkeit in dem User-Interface eine Unterteilung der Abschaltphasen in Synchronisationsstufen vorzunehmen. Eine Darstellung der Teilnehmerliste 10, welche vom Master-Agenten geführt wird, ist weiterhin in dem User-Interface vorgesehen. Dabei werden die von dem Slave-Agenten übertragenen Daten allerdings nur als "read-only" angezeigt.

Ein User-Interface der Slave-Agenten bietet eine Auswahl einer Datei (in der Regel .bat- oder .exe-Datei), die bei Beginn des Pufferbetriebs (gleich Beginn der Übergangsphase) auf dem elektrischen Verbraucher ausgeführt werden soll, an. Auch kann eine Datei ausgewählt werden, die bei Beginn der Abschaltphase auf dem elektrischen Verbraucher ausgeführt werden soll. Bei Auswahl der Option in dem User-Interface "Unterteilung der Abschaltphase in Synchronisationsstufen" gemäß der vorliegenden Erfindung wird eine editierbare, 16-zeilige Tabelle eingeblendet. Die 16 Zeilen symbolisieren die maximale Anzahl von Synchronisationsstufen. Der Betreiber der elektrischen Anlage kann in die einzelnen Zeilen Einträge über auszuführende Dateien und time outs vornehmen.

Für einen energiegesteuerten Abschaltvorgang werden zwei Fälle unterschieden:
1. Generell soll der Abschaltvorgang erst im allerletzten Augenblick eingeleitet werden, nämlich in dem Augenblick, wo der Energieinhalt des Batteriemoduls, der Energie entspricht, die die elektrischen Verbraucher benötigen, um sicher herunterzufahren. Je größer eine Kapazität des Batteriemoduls vom Anlagenbetreiber bemessen wird, umso länger kann die Übergangsphase ausfallen und umgekehrt. Die Übergangsphase kann für den regulären Weiterbetrieb der elektrischen Anlage genutzt werden.
2. Auch gibt es Anlagenbetreiber, die die Überbrückungsphase für den regulären Betrieb des gepufferten Anlagenteils nutzen wollen und im Falle einer zwischenzeitlichen Spannungswiederkehr keine Abschaltphase einleiten möchten.

Hat sich ein Betreiber für den zweiten Fall entschieden, also für den Fall, dass eine elektrische Anlage nach Wegfall der Grundversorgungsspannung 9 so lange wie möglich regulär weiterarbeiten soll - und zwar solange, wie es der Energiespeicher der unterbrechungsfreien Stromversorgungseinheit erlaubt - dann will er ein Herunterfahren der elektrischen Verbraucher wirklich nur dann, wenn die verbleibende Energie im Batteriemodul nur noch dafür ausreicht, um den einzelnen elektrischen Verbraucher zuverlässig herunterzufahren und eine Spannungswiederkehr der Grundversorgungsspannung 6 ausgeblieben ist. Dafür muss der Betreiber der elektrischen Anlage 50 im Vorfeld für jeden elektrischen Verbraucher den Energieverbrauch in der Abschaltphase ermitteln. Mit den ermittelten bzw. berechneten Werten findet er die Minimalgröße der Kapazität des Batteriemoduls, der für einen betrachteten Anlagenteil bzw. für die elektrische Anlage gerade noch ausreichend wäre, um diese sicher herunterzufahren.

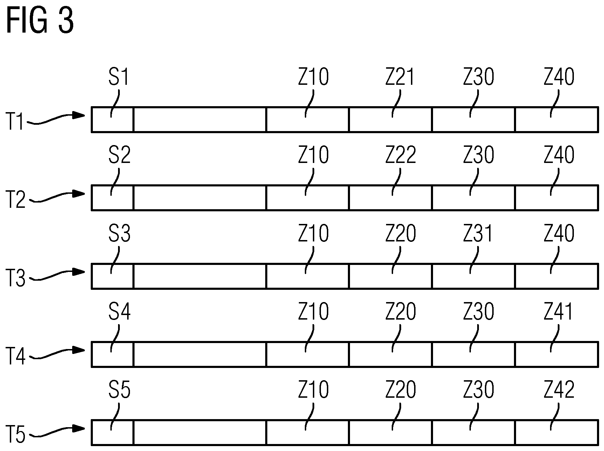

In FIG 3 ist beispielhaft der Ablauf eines Abschaltvorgangs in konfigurierbaren Synchronisationsstufen dargestellt. In diesem Beispiel werden speziell fünf Synchronisationsstufen S1,S2,S3,S4 und S5 eingesetzt, für die jeweils eine bestimmte Zeitdauer T1,T2,T3,T4 und T5 entsprechend der Dauer der Aktionen vorbestimmt ist.

Zu jeder der Synchronisationsstufen S1,S2,S3,S4 und S5 ist für jeden der Verbraucher 1,2,3,4 in seinem jeweiligen Softwarebaustein 11,12,13 bzw. 14 hinterlegt, ob der Verbraucher 1,2,3 oder 4 seinen energetischen Zustand beibehalten oder wechseln soll. Z10 bedeutet, dass der Verbraucher 1 seinen energetischen Zustand nicht wechseln soll. Hat z.B. der Verbraucher 2 nur die beiden energetischen Zustände EIN und AUS, so ist zur Abschaltung nur ein Zustandswechsel Z21 zu berücksichtigen, wobei die Zahl 2 für den Verbraucher steht und die Zahl 1 für den ersten und einzigen Zustandswechsel. Ein zweiter Zustandswechsel des Verbrauchers 3 ist durch Z32 symbolisiert.

Der Master M signalisiert den Verbrauchern 1,2,3,4 einzeln jede Synchronisationsstufe, beginnend mit der Synchronisationsstufe 1, für die die Zeitdauer T1 vorbestimmt ist. Daraufhin werden die in den zugehörigen Softwarebausteinen 11,12,13 und 14 hinterlegten energetischen Zustandswechsel ZXX der Verbraucher 1,2,3,4 für die Synchronisationsstufe 1 erledigt.

Nachdem diese Zustandswechsel ZXX durchgeführt wurden, meldet der entsprechende Softwarebaustein 11,12,13,14 dies zur Quittierung dem Master M.

Nachdem der Master M von allen Verbrauchern 1,2,3,4 die Quittierung erhalten hat oder aber spätestens nach Ablauf der Zeitdauer T1 wird vom Master M die nächste Synchronisationsstufe signalisiert.

Das Signal "Shutdown erreicht" wird an den Master M von den Slaves gesendet, welche sich auf Teilnehmern bzw. Verbrauchern ohne Betriebssystem befinden. Dies wird in der Teilnehmerliste vermerkt. Im Falle einer Spannungswiederkehr ist die Rückkehr in den Normalbetrieb ggf. noch möglich.

Die letzte Synchronisationsstufe betrifft z.B. das Betriebssystem, z.B. das Beenden des Betriebssystems auf dem unteren PC, d.h. im Verbraucher 4 gemäß FIG 1.

Des Weiteren kann auch bei Spannungswiederkehr im Pufferbetrieb die Anlage wieder in den Normalbetrieb versetzt werden, indem das Steuerungsprogramm - in Abhängigkeit der durchlaufenen Synchronisationsstufen - die Anlage wieder hochlaufen lassen und den Normalbetrieb herstellen. Ausfallzeiten werden so gänzlich vermieden, da der Vorbereitungsprozess für die bevorstehende Abschaltung abgebrochen wird.

Nicht zuletzt kann über den speziellen Funktionsbaustein eine bestimmte Synchronisationsschwelle als "Point of no return" gekennzeichnet werden. Wird diese Synchronisationsschwelle an die Teilnehmer signalisiert, ist der vollständige Vorbereitungsprozess für die bevorstehende Abschaltung durchzuführen, da die Anlage nicht mehr "ohne weiteres" in den Normalbetrieb zu versetzen ist. Das kann z.B. der Fall sein, wenn gerade ein PC-System heruntergefahren wird, ohne das die Anlage nicht regulär betrieben werden kann. Die Kennzeichnung "Point of no return" trägt somit auch zur Sicherheit bei.

Die Funktionalität der speziellen Funktionsbausteine kann auch als (PC-)Software umgesetzt werden.

## Patentansprüche

1. Verfahren zum Betrieb einer elektrischen Anlage (50) mit einer Mehrzahl an elektrischen Verbrauchern (1,2,3,4), welche an eine Grundversorgungsspannung (6) angeschlossen sind und bei Ausfall der Grundversorgungsspannung (6) an eine Pufferspannung (7) angeschlossen werden um die Versorgung der elektrischen Verbraucher (1,2,3,4) für eine Zeitdauer einer Pufferphase sicherzustellen, wobei die Pufferspannung (7) mittels einer unterbrechungsfreien Stromversorgungseinheit (5) bereitgestellt wird,
**dadurch gekennzeichnet, dass**
- die Stromversorgungseinheit (5) zum Austausch von Daten über einen Feldbus (8) an die Mehrzahl der elektrischen Verbraucher (1,2,3,4) angeschlossen wird,
- die Mehrzahl der elektrischen Verbraucher (1,2,3,4) jeweils mit einem Softwarebaustein (11,12,13,14,15) versehen werden, welcher in die Kommunikation über den Feldbus (8) eingebunden wird,
- der Softwarebaustein (15) zumindest eines Verbrauchers (1) als ein Master (M) und die Softwarebausteine (11,12,13,14) der anderen Verbraucher (2,3,4) als Slaves (S) im Sinne einer Master-Slave Kommunikation eingestellt werden,
- der Master (M) in der Stromversorgungseinheit (5) als ein Kommunikationspartner für eine Durchführung eines geregelten Abschaltvorganges der elektrischen Verbraucher (1,2,3, 4) eingetragen wird,
- die Stromversorgungseinheit (5) im Falle eines Fehlens der Grundversorgungsspannung (6) dieses Fehlen über den Feldbus (8) dem Master (M) mitteilt und dadurch der geregelte Abschaltvorgang gestartet wird,
- der Abschaltvorgang in konfigurierbaren Synchronisationsstufen (S1,S2,S3,S4,S5...) erfolgt,
- zu jeder der Synchronisationsstufen (S1,S2,S3,S4,S5...) für jeden Verbraucher (1,2,3,4) in seinem jeweiligen Softwarebaustein (11,12,13,14) hinterlegt wird, ob der Verbraucher seinen energetischen Zustand beibehalten oder wechseln soll und, falls mehrere energetische Zustandswechsel(ZXX) möglich und vorgesehen sind, in welchen energetischen Zustand gewechselt werden soll,
- der Master (M) nacheinander den Verbrauchern (1,2,3,4) jede der Synchronisationsstufen (S1,S2,S3,S4,S5...) signalisiert,
- die in den Softwarebausteinen (11,12,13,14) hinterlegten energetischen Zustandswechsel (ZXX) der Verbraucher (1,2, 3,4) für die jeweilige Synchronisationsstufe (S1,S2,S3,S4, S5...) erledigt werden und
- nach Erledigung der entsprechende Softwarebaustein (11,12, 13,14) dies dem Master (M) meldet.

2. Verfahren nach Anspruch 1,
**dadurch gekennzeichnet, dass** die jeweils nächste Synchronisationsstufe (S2,S3,S4 oder S5) vom Master (M) nach Ablauf der Zeitdauer (T1,T2,T3,T4,T5) der vorhergehenden Synchronisationsstufe (S1,S2,S3,S4 oder S5) oder nachdem alle Verbraucher (1,2,3,4) die Erledigung der Zustandswechsel zur Quittierung an den Master (M) gemeldet haben.

3. Verfahren nach Anspruch 1 oder 2,
**dadurch gekennzeichnet, dass** der Master (M) eine Teilnehmerliste (10) zur Verfügung stellt und die Verbraucher (1,2,3,4) mittels ihrer als Slave (S) eingestellten Softwarebausteine (11,12,13,14) in die Teilnehmerliste (10) eingetragen werden.

4. Verfahren nach einem der vorangehenden Ansprüche,
**dadurch gekennzeichnet, dass** als elektrische Verbraucher (1,2,3,4) Geräte aus den Gruppen: Speicherprogrammierbare Steuerungen, Bedien- und Beobachtungssysteme, Industrie- oder Personal-Computer verwendet werden.

5. Elektrisch betriebene Anlage (50) zur Durchführung des Verfahrens nach einem der Ansprüche 1 bis 4 mit einer Mehrzahl an elektrischen Verbrauchern (1,2,3,4), welche an eine Grundversorgungsspannung (6) angeschlossen sind, mit einer unterbrechungsfreien Stromversorgungseinheit (5), welche ausgestaltet ist bei Ausfall der Grundversorgungsspannung (6) eine Pufferspannung (7) an die elektrischen Verbraucher (1,2, 3,4) anzuschalten um die Versorgung der elektrischen Verbraucher (1,2,3,4) für eine Zeitdauer einer Pufferphase sicherzustellen,
**dadurch gekennzeichnet, dass**
- die Stromversorgungseinheit (5) ausgestaltet ist Daten über einen Feldbus (8) mit der Mehrzahl der elektrischen Verbraucher (1,2,3,4) auszutauschen,
- die Mehrzahl der elektrischen Verbraucher (1,2,3,4) jeweils einen Softwarebaustein (11,12,13,14) aufweisen, welcher ausgestaltet ist über den Feldbus (8) zu kommunizieren,
- der Softwarebaustein (15) zumindest eines Verbrauchers (1) als ein Master (M) und die Softwarebausteine (11,12,13,14) der anderen Verbraucher (1,2,3,4) als ein Slave (S) im Sinne einer Master-Slave Kommunikation ausgestaltet sind,
- die Stromversorgungseinheit (5) als ein Kommunikationspartner des Masters (M) für eine Durchführung eines geregelten Abschaltvorganges der elektrischen Verbraucher (1,2,3,4) ausgestaltet ist,
- die Stromversorgungseinheit (5) ausgestaltet ist im Falle eines Fehlens der Grundversorgungsspannung (6) dieses Fehlen über den Feldbus (8) dem Master (M) mitzuteilen,
- der Master (M) und die Softwarebausteine (11,12,13,14) der Verbraucher (1,2,3,4) derart ausgestaltet sind, den Abschaltvorgang in konfigurierbaren Synchronisationsstufen durchzuführen,
- zu jeder Synchronisationsstufe für jeden Verbraucher (1,2, 3,4) in seinem jeweiligen Softwarebaustein (11,12,13,14) hinterlegt wird, ob der Verbraucher (1,2,3,4) seinen energetischen Zustand beibehalten oder wechseln soll und, falls mehrere energetische Zustandswechsel (ZXX) möglich und vorgesehen sind, in welchen energetischen Zustand gewechselt werden soll,
- der Master (M) ausgestaltet ist, nacheinander den Verbrauchern (1,2,3,4) jede Synchronisationsstufe zu signalisieren,
- die Verbraucher (1,2,3,4) ausgestaltet sind, die in den Softwarebausteinen (11,12,13,14) hinterlegten energetischen Zustandswechsel (ZXX) für die jeweilige Synchronisationsstufe zu erledigen und
- die Softwarebausteine (11,12,13,14) ausgestaltet sind, nach Erledigung der energetischen Zustandswechsel (ZXX) für die jeweilige Synchronisationsstufe dies dem Master (M) zu melden.

6. Elektrisch betriebene Anlage (50) nach Anspruch 5, wobei der Master (M) eine Teilnehmerliste (10) aufweist und die Verbraucher (1,2,3,4) mittels ihrer als Slave (S) eingestellten Softwarebausteine (11,12,13,14) ausgestaltet sind sich in die Teilnehmerliste (10) einzutragen.

7. Elektrisch betriebene Anlage (50) nach einem der Ansprüche 5 und 6, wobei die Stromversorgungseinheit (5), die elektrischen Verbraucher (1,2,3,4) und die Softwarebausteine (11,12, 13,14,15) derart ausgestaltet sind, dass sie über ein Softwarewerkzeug (51) parametrierbar sind.

## Claims

1. Method for operating an electrical installation (50) having a plurality of electrical loads (1,2,3,4) which are connected to a basic supply voltage (6) and in the event of the basic supply voltage (6) failing are connected to a backup voltage (7), in order to safeguard the supply to the electrical loads (1,2,3,4) for a duration of a backup phase, wherein the backup voltage (7) is provided by means of an uninterruptible power supply unit (5),
**characterised in that**
- the power supply unit (5) is connected to the plurality of electrical loads (1,2,3,4) via a field bus (8) to exchange data,
- the plurality of electrical loads (1,2,3,4) are each provided with a software module (11,12,13,14,15) which is integrated into the communication via the field bus (8),
- the software module (15) of at least one load (1) is appointed as a master (M) and the software modules (11,12,13,14) of the other loads (2,3,4) as slaves (S) in the context of master-slave communication,
- the master (M) in the power supply unit (5) is entered as a communication partner for performance of a regulated shutdown procedure of the electrical loads (1,2,3,4),
- in the event of a failure of the basic supply voltage (6) the power supply unit (5) notifies the master (M) of said failure via the field bus (8) and as a result the regulated shutdown procedure is launched,
- the shutdown procedure takes place in configurable synchronisation stages (S1,S2,S3,S4,S5...),
- for each of the synchronisation stages (S1,S2,S3,S4,S5...) the relevant software module (11,12,13,14) for each load (1,2,3,4) stores whether the load should maintain or change its energy state and, if several energy state changes (ZXX) are possible and provided for, to which energy state it should change,
- the master (M) signals each of the synchronisation stages (S1,S2,S3,S4,S5...) consecutively to the loads (1,2,3,4),
- the energy state changes (ZXX) of the loads (1,2,3,4) stored in the software modules (11,12,13,14) are executed for the respective synchronisation stage (S1,S2,S3,S4, S5...) and
- after execution the corresponding software module (11,12,13,14) reports this to the master (M).

2. Method according to claim 1,
**characterised in that** the respective next synchronisation stage (S2,S3,S4 or S5) is signalled by the master (M) on conclusion of the duration (T1,T2,T3,T4,T5) of the preceding synchronisation stage (S1,S2,S3,S4 or S5) or after all loads (1,2,3,4) have reported the execution of the state change to the master (M) in acknowledgement.

3. Method according to claim 1 or 2,
**characterised in that** the master (M) makes available a user list (10) and the loads (1,2,3,4) are entered in the user list (10) by means of their software modules (11,12,13,14) appointed as slaves (S).

4. Method according to one of the preceding claims,
**characterised in that** devices from the following group are used as electrical loads (1,2,3,4):
programmable logic controllers, operator control and monitoring systems, industrial or personal computers.

5. Electrically operated installation (50) for the performance of the method according to one of claims 1 to 4, having a plurality of electrical loads (1,2,3,4) which are connected to a basic supply voltage (6), having an uninterruptible power supply unit (5) which is configured, in the event of a failure of the basic supply voltage(6), to actuate a backup voltage (7) to the electrical loads (1,2,3,4) in order to safeguard the supply to the electrical loads (1,2,3,4) for a duration of a backup phase,
**characterised in that**
- the power supply unit (5) is configured to exchange data with the plurality of electrical loads (1,2,3,4) via a field bus (8),
- the plurality of electrical loads (1,2,3,4) each have a software module (11,12,13,14) which is configured to communicate via the field bus (8),
- the software module (15) of at least one load (1) is configured as a master (M) and the software modules (11,12,13,14) of the other loads (1,2,3,4) as slaves (S) in the context of master-slave communication,
- the power supply unit (5) is configured as a communication partner of the master (M) for performance of a regulated shutdown procedure of the electrical loads (1,2,3,4),
- the power supply unit (5) is configured, in the event of a failure of the basic supply voltage (6), to notify said failure to the master (M) via the field bus (8),
- the master (M) and the software modules (11,12,13,14) of the loads (1,2,3,4) are configured to perform the shutdown procedure in configurable synchronisation stages,
- for each synchronisation stage the software module (11,12,13,14) for each load (1,2,3,4) stores whether the load (1,2,3,4) should maintain or change its energy state and, if several energy state changes (ZXX) are possible and provided for, to which energy state it should change,
- the master (M) is configured to signal each synchronisation stage consecutively to the loads (1,2,3,4),
- the loads (1,2,3,4) are configured to execute the energy state changes (ZXX) stored in the software modules (11,12,13,14) for the respective synchronisation stage and
- the software modules (11,12,13,14) are configured, after execution of the energy state changes (ZXX) for the respective synchronisation stage, to report this to the master (M).

6. Electrically operated installation (50) according to claim 5, wherein the master (M) has a user list (10) and the loads (1,2,3,4) are configured, by means of their software modules (11,12,13,14) appointed as slaves (S), to enter themselves in the user list (10).

7. Electrically operated installation (50) according to one of claims 5 and 6, wherein the power supply unit (5), the electrical loads (1,2,3,4) and the software modules (11,12, 13,14,15) are configured such that they can be parameterised using a software tool (51).

## Revendications

1. Procédé destiné à l'exploitation d'une installation électrique (50) avec une pluralité de consommateurs électriques (1, 2, 3, 4), qui sont raccordés à une tension d'alimentation de base (6) et qui sont raccordés à une tension tampon (7) lors d'une défaillance de la tension d'alimentation de base (6) afin de garantir l'alimentation des consommateurs électriques (1, 2, 3, 4) pour la durée d'une phase tampon, dans lequel la tension tampon (7) est mise à la disposition d'une unité d'alimentation électrique sans coupure (5), **caractérisé en ce que**
- l'unité d'alimentation électrique (5) est raccordée à la pluralité des consommateurs électriques (1, 2, 3, 4) en vue d'un échange de données par l'intermédiaire d'un bus de terrain (8),
- la pluralité des consommateurs électriques (1, 2, 3, 4) est dotée respectivement d'un composant logiciel (11, 12, 13, 14, 15) qui est intégré à la communication par l'intermédiaire du bus de terrain (8),
- le composant logiciel (15) d'au moins un consommateur (1) est réglé en tant que maître (M) et les composants logiciels (11, 12, 13, 14) des autres consommateurs (2, 3, 4) sont réglés en tant qu'esclave (S) dans le sens d'une communication maître-esclave,
- le maître (M) dans l'unité d'alimentation électrique (5) est enregistré en tant que partenaire de communication pour l'exécution d'un processus de mise hors tension réglé des consommateurs électriques (1, 2, 3, 4),
- l'unité d'alimentation électrique (5) en cas d'insuffisance de la tension d'alimentation de base (6) communique cette insuffisance par l'intermédiaire du bus de terrain (8) au maître (M) et de ce fait le processus de mise hors tension réglé est lancé,
- le processus de mise hors tension se déroule lors d'étapes de synchronisation configurables (SI, S2, S3, S4, 55...),
- à chacune des étapes de synchronisation (SI, S2, S3, S4, S5...) pour chaque consommateur (1, 2, 3, 4) dans son composant logiciel (11, 12, 13, 14) respectif il est enregistré si le consommateur doit conserver ou changer son état énergétique et, dans le cas où plusieurs changements d'état énergétique (ZXX) sont possibles et prévus, dans quel état énergétique il faut passer,
- le maître (M) signale successivement chacune des étapes de synchronisation (SI, S2, S3, S4, S5...) aux consommateurs (1, 2, 3, 4),
- les changements d'état énergétique (ZXX), enregistrés dans les composants logiciels (11, 12, 13, 14), des consommateurs (1, 2, 3, 4) sont accomplis pour les étapes de synchronisation (SI, S2, S3, S4, S5...) respectives et
- le composant logiciel (11, 12, 13, 14) correspondant annonce au maître (M) l'accomplissement.

2. Procédé selon la revendication 1,
**caractérisé en ce que** l'étape de synchronisation (S2, S3, S4 ou S5) respectivement suivante est annoncée par le maître (M) après l'écoulement d'une durée (T1, T2, T3, T4, T5) de l'étape de synchronisation (SI, S2, S3, S4 ou S5) précédente ou après que tous les consommateurs (1, 2, 3, 4) ont annoncé au maître (M) l'accomplissement des changements d'état pour la confirmation.

3. Procédé selon la revendication 1 ou 2,
**caractérisé en ce que** le maître (M) met à disposition une liste de participants (10) et les consommateurs (1, 2, 3, 4) sont enregistrés dans la liste de participants (10) au moyen de leurs composants logiciels (11, 12, 13, 14) réglés en tant qu'esclave (S) .

4. Procédé selon l'une des revendications précédentes, **caractérisé en ce que**, en tant que consommateurs électriques (1, 2, 3, 4) sont utilisés des appareils issus des groupez : commandes par programme enregistré, systèmes de manipulation et d'observation, ordinateurs industriels ou individuels.

5. Installation fonctionnant à l'électricité (50) destinée à l'exécution du procédé selon l'une des revendications 1 à 4 avec une pluralité de consommateurs électriques (1, 2, 3, 4), qui sont raccordés à une tension d'alimentation de base (6), avec une unité d'alimentation électrique sans coupure (5), qui est conçue en cas de défaillance de la tension d'alimentation de base (6) pour mettre en marche les consommateurs électriques (1, 2, 3, 4) avec une tension tampon (7) pour garantir l'alimentation des consommateurs électriques (1, 2, 3, 4) pendant la durée d'une phase tampon,
**caractérisée en ce que**
- l'unité d'alimentation électrique (5) est conçue pour échanger des données avec la pluralité des consommateurs électriques (1, 2, 3, 4) par l'intermédiaire d'un bus de terrain (8),
- la pluralité des consommateurs électriques (1, 2, 3, 4) présentent respectivement un composant logiciel (11, 12, 13, 14) qui est conçu pour communiquer par l'intermédiaire du bus de terrain (8),
- le composant logiciel (15) d'au moins un consommateur (1) est conçu en tant que maître (M) et les composants logiciels (11, 12, 13, 14) des autres consommateurs (1, 2, 3, 4) sont conçus en tant qu'esclave (S) dans le sens d'une communication maître-esclave,
- l'unité d'alimentation électrique (5) est conçue en tant que partenaire de communication du maître (M) pour l'exécution d'un processus de mise hors tension réglé des consommateurs électriques (1, 2, 3, 4),
- l'unité d'alimentation électrique (5) est conçue pour communiquer au maître (M) dans le cas d'une insuffisance de la tension d'alimentation de base (6) cette insuffisance par le biais du bus de terrain (8),
- le maître (M) et les composants logiciels (11, 12, 13, 14) des consommateurs (1, 2, 3, 4) sont conçus de manière à exécuter le processus de mise hors tension lors d'étapes de synchronisation configurables,
- à chaque étape de synchronisation il est enregistré pour chaque consommateur (1, 2, 3, 4) dans son composant logiciel (11, 12, 13, 14) respectif si le consommateur (1, 2, 3, 4) doit conserver ou changer son état énergétique et, dans le cas où plusieurs changements d'état énergétique (ZXX) sont possibles et prévus, dans quel état énergétique il faut passer,
- le maître (M) est conçu pour signaler successivement chaque étape de synchronisation aux consommateurs (1, 2, 3, 4),
- les consommateurs (1, 2, 3, 4) sont conçus pour accomplir les changements d'état énergétique (ZXX) enregistrés dans les composants logiciels (11, 12, 13, 14) pour l'étape de synchronisation respective et
- les composants logiciels (11, 12, 13, 14) sont conçus pour annoncer au maître (M) l'accomplissement des changements d'état énergétique (ZXX) pour l'étape de synchronisation respective.

6. Installation fonctionnant à l'électricité (50) selon la revendication 5, dans laquelle le maître (M) présente une liste de participants (10) et les consommateurs (1, 2, 3, 4) sont conçus pour s'intégrer à la liste de participants (10) au moyen de leurs composants logiciels (11, 12, 13, 14) réglés en tant qu'esclave (S).

7. Installation fonctionnant à l'électricité (50) selon l'une des revendications 5 et 6, dans laquelle l'unité d'alimentation électrique (5), les consommateurs électriques (1, 2, 3, 4) et les composants logiciels (11, 12, 13, 14, 15) sont conçus de telle sorte qu'ils peuvent être paramétrés par l'intermédiaire d'un outil logiciel (51).
